# EUROPÄISCHE PATENTANMELDUNG

(11) **EP 2 674 732 A2**
(43) Veröffentlichungstag der Anmeldung: **18.12.2013**
(21) Anmeldenummer: 13002939.0
(22) Anmeldetag: 07.06.2013
(51) Int. Cl.: G01F 1/075

(54) **Durchflussmesser für Fluide und Verfahren zum Messen des Durchflusses eines Fluids**

(30) Priorität: 14.06.2012 DE 102012011716
(71) Anmelder: Bopp & Reuther Messtechnik Gmbh, 67346 Speyer (DE)
(72) Erfinder: Czempas, Dominic, D-76137 Karlsruhe (DE); Krause, Michael, D-76297 Stutensee (DE)
(74) Vertreter: Lempert, Jost

(57) **Zusammenfassung**

Zur Schaffung eines Durchflussmessers, der bei einfachem wartungsarmen Aufbau ohne Druckverluste und ohne in sonstiger Weise verfälschte Messergebnisse autonom eine rückwirkungsfreie Messung ermöglicht, sieht die Erfindung einen Durchflussmesser (1) für Fluide vor, mit einem Gehäuse aus mindestens einem Unterteil (2) und einem Deckteil (2.1), wobei mindestens ein Drehkörper (3, 3A) drehbar um eine Drehachse (A) im Gehäuse gelagert ist, mit mindestens einem magnetischen Geber (4) und mindestens einem elektro-magnetischen Empfänger (5), wobei Geber und Empfänger relativ zueinander drehbar am Drehkörper bzw. am Gehäuse angeordnet sind, und wobei der mindestens eine Empfänger mit einer Auswerteelektronik (14) zur Detektion einer Drehbewegung des Drehkörpers verbunden ist, wobei weiterhin der Empfänger wenigstens eine Spule ist, die Spule über den Umfang der Drehachse hin mehrere einzelne segmentförmige Spulenelemente aufweist, und dass die Spulenelemente über einen Spannungswandler mit einem Energiespeicher verbunden sind.

## Beschreibung

Die Erfindung betrifft einen Durchflussmesser für Fluide, mit mindestens einem drehbar um eine Drehachse in einem Gehäuse gelagerten Drehkörper mit mindestens einem magnetischen Geber und mindestens einem elektro-magnetischen Empfänger, wobei Geber und Empfänger relativ zueinander drehbar am Drehkörper bzw. am Gehäuse angeordnet sind, und wobei der mindestens eine Empfänger mit einer Auswerteelektronik zur Detektion einer Drehbewegung des Drehkörpers verbunden ist. Die Erfindung betrifft weiterhin ein Verfahren zum Messen des Durchflusses eines Fluids durch eine Leitung, wobei durch das Strömen eines Fluids mindestens ein drehbar um eine Drehachse in einem Gehäuse gelagerter Drehkörper in Drehung versetzt wird, wobei das sich zumindestens ein magnetischer Geber und ein elektro-magnetischer Empfänger relativ zueinander um die Drehachse drehen, in dem der oder die Geber am Drehkörper angeordnet ist bzw. sind und der bzw. die Empfänger am Gehäuse angeordnet ist bzw. sind oder vice versa und wobei ein durch die Relativdrehung von Geber und Empfänger in dem oder den Empfängern erzeugtes elektrisches Signal mittels einer Auswerteelektronik zur Detektion einer Drehbewegung des Drehkörpers ausgewertet wird.

Durchflussmesser, insbesondere in der Ausgestaltung als Volumendurchmesser, sind in unterschiedlicher Ausgestaltung bekannt, beispielsweise als Flügelrad-Durchflussmesser oder als Ovalradzähler. Diese Drehkörper sind dabei weitgehend oder vollständig in einem Unterteil des Gehäuses angeordnet. Derartige Durchflussmesser weisen einen Detektor auf, der mit elektrischer Energie versorgt werden muss, beispielsweise in Form eines Hallsensors sowie eine Auswerteelektronik zur Auswertung der Drehbewegungen des oder der Drehkörper zur Gewinnung von Informationen über die durch den Durchflussmesser geflossene Fluidmenge bzw. das durchgeflossene Fluidvolumen. Hierzu müssen der Detektor und die Auswerteelektronik mit elektrischer Energie über Leitungen versorgt werden, was oft bei entfernter isolierter Anordnung der Durchflussmesser sehr aufwendig ist.

Es wurde in der Praxis schon vorgeschlagen, für entsprechende elektrische oder elektronische Bauteile, wie Sensoren, Detektoren und Auswerteelektroniken Energie nach dem Generator- oder Dynamoprinzip aus in der Flüssigkeit befindlichen Drehkörpern zu gewinnen. Nachteilig ist zum einen, dass bei zusätzlichen Drehkörpern, wie in einer im Gasstrom vorgesehenen zusätzlichen Turbine, nicht akzeptable Druckverluste auftreten, zum anderen bei Durchflussmessern mit Drehkörpern und aufgrund deren Drehung gewonnener Energie durch elektromagnetische Wechselwirkung erhebliche Bremsmomente entstehen, die eine rückwirkungsfreie Messung und zugleich Energiegewinnung nicht möglich machen. Eine Turbine kann nur als zusätzliches Bauteil zu einer Messdrehkörper vorgesehen sein, da die Umdrehungen einer Turbine den Durchfluss nicht genau erfassen können. Daher und auch darüber hinaus sind bekannte Konstruktionen aufwendig.

Der Erfindung liegt die Aufgabe zugrunde, einen Durchflussmesser und ein Verfahren der eingangs genannten Art zu schaffen, der bei konstruktiv einfachem Aufbau ohne zusätzliche Druckverluste sowie ohne durch Bremsmomente verfälschte Messergebnisse in synergistischer Weise gleichzeitig eine Durchflussmessung und eine Energiegewinnung zur Versorgung elektrischer/elektronischer Bauteile zur Durchführung der Durchflussmessung gewährleistet.

Erfindungsgemäß wird die genannte Aufgabe bei einem gattungsgemäßen Durchflussmesser dadurch gelöst, dass der Empfänger wenigstens eine Spule ist, dass die Spule über den Umfang der Drehachse hin mehrere einzelne segmentförmige Spulenelemente aufweist, und dass die Spulenelemente über einen Spannungswandler mit einem Energiespeicher verbunden sind. Zur Lösung der genannten Aufgabe sieht die Erfindung weiterhin bei einem gattungsgemäßen Verfahren vor, dass bei Drehung des Drehkörpers durch den Geber in mindestens einer Spule mit über den Umfang der Drehachse hin angeordneten mehreren einzelnen segmentförmigen Spulenelementen (5.4) als Empfänger induzierte elektrische Strom-Spannungs-Impulse einem Energiespeicher zugeführt werden.

Die Erfindung beinhaltet damit die Integration von Energiegewinnung und Sensorik bzw. Drehzahlmessung in einem Bauteil, nämlich dem durch Spulensegmente oder -elemente gebildeten Empfänger, der sowohl mit einem Energiespeicher als auch mit der Auswerteelektronik verbunden ist. Weiter ergibt sich durch die Anordnung der Spulensegmente/- elemente eine volumenproportionale Erzeugung der die Drehung des Motors umgebenden Impulse an die Auswahlelektronik.

Durch die Erfindung, insbesondere die in Radialebenen um die Drehachse angeordnete Spule mit über den Umfang verteilten einzelnen Spulenelementen bzw. -segmenten wird es möglich, gleichzeitig ohne Bremsmomente in nahezu rückwirkungsfreier Weise Energie zur Versorgung elektrischer/ elektronischer Bauelemente zu gewinnen und ebenfalls mittels des genannten Spulenelements die Detektion der Drehbewegung und damit Bestimmung der Durchflussmessung bei Fluiden, insbesondere dünnflüssigen Flüssigkeiten, durchzuführen, wo schnell jedes Bremsmoment zu einem erheblichen Messfehler führen kann.

Darüber hinaus wird durch die Erfindung eine einfache Ausführung mit wenigen Bauteilen und geringer Komplexität geschaffen, die keinen nennenswerten zusätzlichen Druckverlust bedingt. Auch erfolgt durch die Unterteilung der sowohl als Energiegewinner als auch Detektor durch Segmente ausgebildete Spule eine hoch auflösende Erfassung der Drehbewegung. Weiterhin geschieht durch die Speicherung der durch die Drehbewegung gewonnenen Energie die sichere und zuverlässige Versorgung einer lokalen Auswerteelektronik mit elektrischer Energie.

Ein weiterer Vorteil des erfindungsgemäßen Durchflussmessers liegt darin, dass keine aufwendigen Drehführungen vorhanden sind (im Unterschied zu einem klassischen Dynamo), damit ergeben sich keine Abdichtungsprobleme, zusätzliche Bremsmomente, keine bewegte Teile in der EnergieGewinnung/Drehbewegungsdetektion. Die Spule der Erfindung ist insbesondere durch eine Kette von einzelnen Spulenelementen gebildet. Die Winkelverteilung der einzelnen Spulenelemente ist vorzugsweise in entsprechenden Winkeln so angeordnet, dass volumenproportionale Impulse abgeliefert werden, was auch die Signalaufarbeitung deutlich vereinfacht. Durch die Erfindung wird erreicht, dass der Empfänger sehr in der Nähe der Rotoren positioniert werden kann, was sich sehr positiv auf die Effizienz des Gesamtsystems auswirkt und es erlaubt, neben einer optimalen Energiebilanz Drehsignal-Informationen eine sehr gute Qualität auch bei geringen Herstellungskosten zu erhalten. In bevorzugter Ausgestaltung ist vorgesehen, dass Geber und Empfänger an der Stirnseite des Drehkörpers bzw. an einer benachbarten Stirnseite des Gehäuses angeordnet sind und/oder dass die Spule flach in einer Radialebene über den Umfang der Drehachse liegende Spulenelemente aufweist. Die Spule und damit die Spulenelemente sind (eisen-) kernlose Spulen bzw. Spulenelemente.

Bevorzugte Ausgestaltungen des erfindungsgemäßen Durchflussmessers sehen vor, dass der Spannungswandler eine Gleichrichterschaltung aufweist und/oder dass er mindestens eine stabile Ausgangsspannung liefert. In bevorzugter Ausgestaltung ist die Spule aus Kupfermaterial ausgebildet, wobei keinerlei Eisenkerne vorhanden sind. Als Energiespeicher kommen grundsätzlich (aufladbare) Batterien oder Akkumulatoren in Frage, äußerst bevorzugt aber ein oder mehrere Kondensatoren. In weiterer bevorzugter Ausgestaltung kann vorgesehen sein, dass die Auswerteelektronik zur Bestimmung des inneren Widerstandes der Spule ausgebildet ist, wodurch eine Temperaturerfassung erfolgen kann. Diese so gewonnene Temperaturinformation kann zu Diagnosezwecken für das System genutzt werden, beispielsweise kann ein erheblicher Temperaturanstieg eine Fehlfunktion des Durchflussmessers, beispielsweise aufgrund zu großer Lagerreibung oder dergleichen, anzeigen.

In weiterer bevorzugter Ausgestaltung ist vorgesehen, dass mehrere Planarspulen in axialer Richtung übereinander angeordnet sind, wodurch gerade im Hinblick auf den Verzicht auf Spulenkerne eine höhere Ausbeute elektrischer Energie erzielt werden kann. Durch die Ausgestaltung der Spule als Planarspule kann ebenfalls bei dem im Hinblick auf die Rückwirkungsfreiheit notwendigen Verzicht auf Eisenkerne eine hohe Effizienz dadurch erreicht werden, dass die Spulen als Empfänger äußerst nah an den Magneten als Gebern und die durch diesen erzeugten elektrischen Feldern angeordnet sind.

Weitere alternative Ausgestaltungen der Erfindung sehen vor, dass der Magnet auf mindestens einem Drehkörper und der Empfänger in Form einer Spule am Gehäuse angeordnet sind oder dass der mindestens eine Magnet im Gehäuse und der Empfänger in Form einer Spule an einem Drehkörper angeordnet sind, wobei in letzterem Fall darüber hinaus vorgesehen sein kann, dass die Auswerteelektronik im Drehteil angeordnet ist.

Grundsätzlich, insbesondere aber bei letzter Ausgestaltung, sieht die Erfindung darüber hinaus in bevorzugter Weise einen Sender zur drahtlosen Übertragung der durch die Auswerteelektronik gewonnenen Drehbewegungsinformation vor. Durch die Anordnung der Messelektronik in einem der Drehkörper wird ein äußerst kompakter Aufbau ermöglicht, was gerade die erfindungsgemäß vorgesehene Gewinnung der elektrischen Energie am Ort voraussetzt, damit aus der Auswerteelektronik im Drehkörper die gewonnenen Durchflussinformationen mittels des Senders nach außen übertragen werden können.

In weiterer bevorzugter Ausgestaltung ist vorgesehen, dass der Drehkörper zwei miteinander kämmende Ovalzahnräder aufweist. Vorzugsweise ist vorgesehen, dass zumindest zwischen Rotor und Empfänger befindliche Teile aus nichtferromagnetischen bzw. nicht-magnetischen Werkstoffen bestehen. Die entsprechenden Teile, wie Abdeckung des Gehäuses, bestehen daher vorzugsweise aus dia- oder paramagnetischen Werkstoffen, wie Edelstahl, Aluminium oder Kunststoff.

Der erfindungsgemäße Durchflussmesser kann vorteilhaft zur Leckagedetektion eingesetzt werden. Dabei ist der Durchflussmesser so dimensioniert, dass der maximale Durchfluss der Leckage mit dem maximalen Durchfluss des Durchflussmessers korrespondiert. Es kommt hierbei auf die sichere Erkennung und datentechnische Weitermeldung der Leckage an. Der Durchflussmesser arbeitet so in einem ON/OFF-Betriebsmodus. Hierzu schaltet der Zähler in einen Durchflussmessermodus um, in dem im Falle der Leckage zusätzlich so lange wie nötig Energie gesammelt wird (z.B. 10 min. war in der Regel vertretbar), woraufhin dann der Fehler per Funk, GSM o.ä. an eine Zentrale gesendet wird.

Das Gehäuse des Durchflussmessers weist vorzugsweise mindestens ein Unterteil und mindestens ein Deckteil auf.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnung im Einzelnen erläutert sind:

### Dabei zeigt:

- Fig. 1: das Unterteil eines erfindungsgemäßen Durchflussmessers in Form eines Ovalradzählers mit Gehäuseunterteil und zwei in diesem angeordneten miteinander kämmenden Ovalzahnrädern;
- Fig. 2: eine schematische Gesamtdarstellung des erfindungsgemäßen Durchflussmessers mit Vertikalschnitt durch das Messgehäuse;
- Fig. 3: Ober- und Unterseite - mit gleicher Blickrichtung - einer erfindungsgemäßen Planarspule mit zwei auf einer Platine angeordneten Einzelspulen, die über den Umfang in sektorielle Spulenwindungen unterteilt sind;
- Fig. 4: in schematischer Darstellung eine perspektivische Ansicht einer mehrlagigen Spule mit mehr als zwei Einzellagen;
- Fig. 5: eine schematische Darstellung der gesamten erfindungsgemäßen Vorrichtung mit von der Rotation der Drehkörper des erfindungsgemäßen Durchflussmessers sowohl abgeleiteter Energiegewinnung und Speicherung als auch Signalgewinnung;
- Fig. 6: eine Schaltungsanordnung zur Spannungswandlung der gewonnenen Energie;
- Fig. 7: eine alternative Schaltungsanordnung zur Spannungswandlung der gewonnenen Energie mit einem Sender zur drahtlosen Übertragung der gewonnenen Durchflussinformationen; und
- Fig. 8: eine Schaltung zur Signalverarbeitung der gewonnenen Drehinformation.

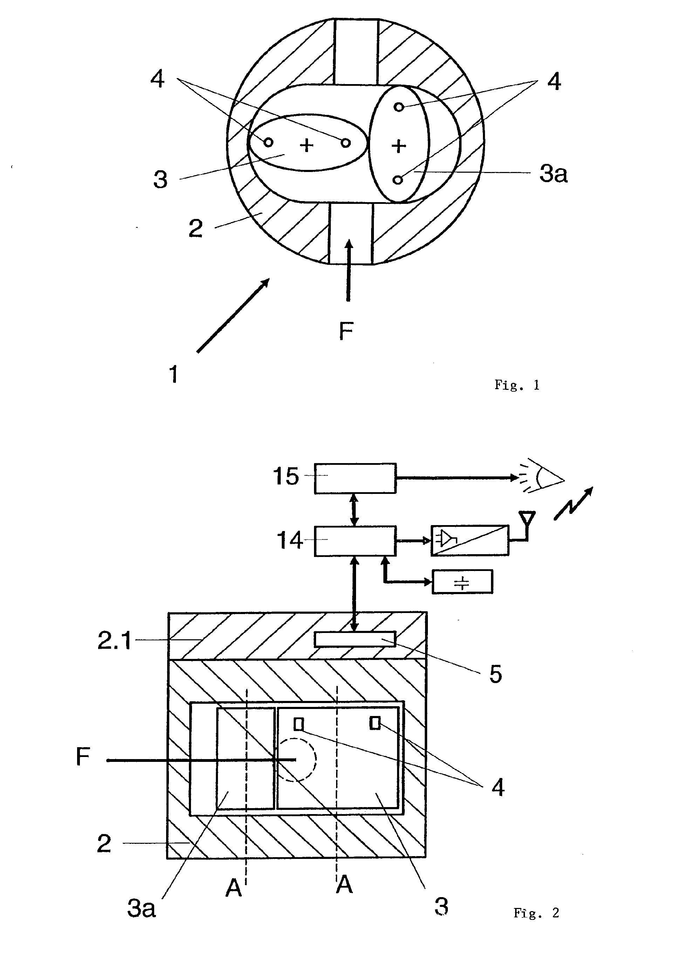

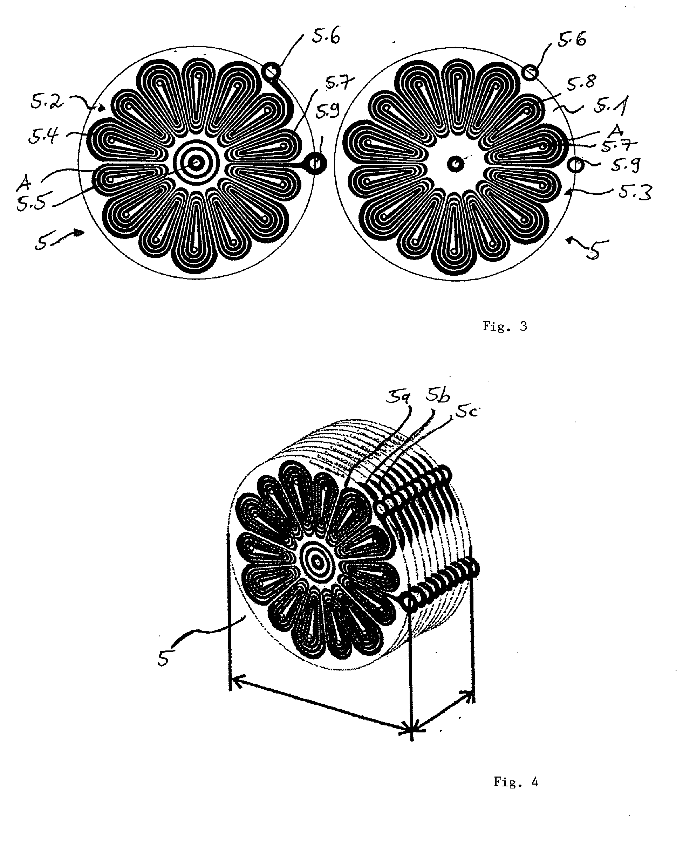

Der erfindungsgemäße Volumen-Durchflussmesser 1 weist in der in den Fig. 1 und 2 dargestellten Ausführungsform als Ovalradzähler ein Gehäuseunterteil oder kurz Unterteil 2 mit in einer Ausnehmung desselben angeordneten Drehkörpern 3, 3a in Form von Ovalzahnrädern auf, die um parallele Drehachsen A (hierzu auch Fig. 2, 3) drehbar sind und mit ihrer Außenverzahnung kämmen. Der Flüssigkeitszufluss F erfolgt senkrecht zu den Drehachsen A der Drehkörper 3, 3a und zwar mittig zwischen diesen beiden Achsen. Das Gehäuseunterteil 2 und damit die die Drehkörper 3, 3a aufnehmende Kammer sind durch ein Gehäusedeckteil oder kurz Deckteil 2.1 dicht verschließbar, das zusammen mit dem Unterteil 2 zusammen das Gehäuse des Durchflussmessers 1 bildet.

In zumindest einem der Drehkörper 3, 3a sind - mit möglichst großem Abstand - voneinander jeweils zwei Permanentmagnete 4 aus ferromagnetischem Material angeordnet, deren Nord-Süd-Richtung parallel zu den Drehachsen gerichtet ist, so dass entweder der Nord- oder der Südpol der Magnete in einer Stirnseite des jeweiligen Drehkörpers angeordnet ist. Die Magnete 4 sind vorzugsweise zylindrisch ausgebildet, so dass ihre obere Stirnseite eben in der oberen Stirnseite der Drehkörper 3, 3a liegt. Sämtliche andere Teile sind aus nicht-ferromagnetischem Material.

Im Deckteil des Gehäuses 1 ist hier eine Planarspule 5 angeordnet, wie sie in der Fig. 2 dargestellt ist. Die Planarspule 5 ist in Flucht zu den Magneten 4 axial versetzt zu diesen, aber mit geringem Abstand zu den ihr zugewandten Stirnseiten der Magnete angeordnet, wobei der Abstand vorzugsweise im Bereich von 1 mm liegt.

Die Spule 5 ist mit einer Verarbeitungselektronik V verbunden, die einerseits Messergebnisse und sonstige Informationen direkt über eine angeschlossene Anzeige 15 anzeigen kann, andererseits diese Informationen über einen Sender 16 drahtlos übertragen kann. Weiterhin ist ein Energiespeicher 6.1, beispielsweise als Puffer-Kondensator dargestellt, mit dem gewonnene Energie zwischengespeichert werden kann; der Energiespeicher kann auch ein Akkumulator sein.

Die Planarspule 5 ist im dargestellten Ausführungsbeispiel als Doppelspule mit zwei beidseits eines als Platine 5.1 ausgebildeten Trägers angeordneten Einzelspulen 5.2 und 5.3 ausbildet.

Die Einzelspulen 5.2, 5.3 sind weiterhin über den Umfang der Drehachse hin in einzelne sektorielle Spulenelemente 5.4, 5.5 oder Spulensegmente unterteilt und zwar bei beiden Einzelspulen 5.2., 5.3 mit vierzehn Spulenelementen 5.4., 5.5, wobei benachbarte Spulenelemente 5.4, 5.5 eine unterschiedliche radiale Höhe oder Erstreckung aufweisen, nämlich ein Spulenelement 5.4 hat eine größere radiale Erstreckung als ein Spulenelement 5.5.

Die elektrische Verbindung der einzelnen Spulen erfolgt von einem Spulenanschluss 5.6 über die nach innen führenden Planarwindungen bis zu einem inneren Anschlusspunkt 5.7, bei dem eine Durchkontaktierung auf die von der Einzelspule 5.2 auf der anderen Seite der Platine 5.1 angeordneten Einzelspule 5.3 erfolgt, von dort über sich nach außen verbreiternde Windungen ein Spulenelement des Typs 5.5 gebildet wird und von diesem ein Übergang zu dem benachbarten Spulenelement des Typs 5.4 gebildet wird, von diesem ausgehend ein Übergang zu einem Spulenelement des Typs 5.5 erfolgt, bei dem wieder Windungen von außen nach innen gelegt sind und über einen Anschlusspunkt 5.8 eine Durchkontaktierung zur gegenüberliegenden Einzelspule 5.4 erfolgt etc., bis die Gesamtspule zum Anschlusspunkt 5.9 geführt ist.

Wie ersichtlich, sind die Windungen benachbarter Spulenelemente 5.4, 5.6 gegensinnig ausgerichtet. Diese Ausgestaltung der Planarspule mit Spulensegmenten oder sektoriellen Spulenelementen 5.4, 5.5 ermöglicht eine hoch auflösende Erfassung der Drehbewegung der Drehkörper 3, 3a. Gleichzeitig wird bei der Drehung der Drehkörper 3, 3a durch die in diesen angeordneten Permanentmagnete 4 und die Spule 5 eine Wechselspannung in der Spule 5 induziert und damit durch die Drehbewegung der Drehkörper 3, 3a nach dem Generatorprinzip in den Spulen 5 elektrische Energie erzeugt, die, wie im Weiteren beschrieben, genutzt bzw. gespeichert werden kann.

Die Spulenwindungen der Spule 5 sind vorzugsweise aus Kupfer. Bei der dargestellten Planar-Doppel-Spule handelt es sich um eine kernlose Spule. Dies hat gegenüber Spulen mit Eisenkernen den Vorteil, dass die Rück- bzw. Bremswirkung der magnetischen Wechselwirkung von Permanentmagneten 4 und Spule 5 auf die Drehbewegung der Drehkörper 3, 3a gering ist und damit der Durchfluss durch den Durchflussmesser nicht gegenüber einem entsprechenden Durchflussmesser ohne Spannungserzeugung behindert wird.

Die Fig. 4 zeigt eine mehrlagige Planarspule 5 mit mehreren isoliert zueinander angeordneten Einzelspulen 5a, 5b, 5c, mit der die Energieausbeute gegenüber der Doppel-PlanarSpule der Fig. 3 bei gleichen Radialabmessungen (allerdings vergrößerten Axialabmessungen) vergrößert werden kann.

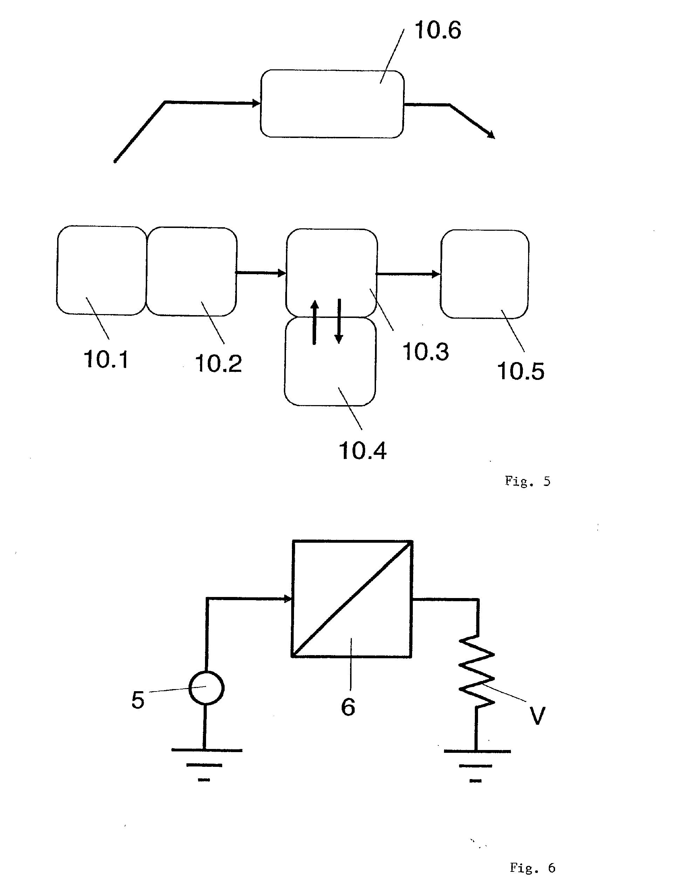

Die Fig. 5 beinhaltet eine funktionelle Darstellung des erfindungsgemäßen Durchflussmessers mit der Darstellung des Ablaufs des Verfahrens zur Energiegewinnung und Durchflussmessung. Durch die Rotation 10.1 der Drehkörper 3, 3a wird in der vorstehend beschriebenen Weise über die Spulenanordnung 3, 4 als Energiequelle 10.2 Energie erzeugt, die in einer Energieaufbereitung in Form eines AC/DC-Wandlers 10.3 unter Spannungswandlung von Wechselstrom in Gleichstrom gewandelt wird, der in einem elektrischen Speicher 10.4, beispielsweise in Form eines Kondensators, gespeichert wird. Soweit für die im Durchflussmesser vorgesehene Auswerteelektronik 10.5 Energie benötigt wird, wird diese vom Wandler 10.3 als Gleichstromenergie zur Verfügung gestellt. Gleichzeitig wird über eine Signalaufbereitung 10.6 das durch die Drehbewegung der Drehkörper 3, 3a erzeugte Wechselspannungssignal zur Erfassung der Drehbewegung und damit der Bestimmung des Durchflusses durch den Durchflussmesser 1 aufbereitet und kann in der Auswerteelektronik 10.5 weiter verarbeitet werden. Von dort aus kann weiterhin eine Übertragung der gewonnenen Informationen, insbesondere in drahtloser Weise, über einen Sender zur weiteren Erfassung erfolgen.

Die Fig. 6 zeigt einen Spannungswandler 6 zur Spannungswandlung der über den Generator mit der Spule 5 erzeugten Spannung, insbesondere über einen Brückengleichrichter mit Siebung mit DC/DC-Wandlung wodurch eine konstante Ausgangsspannung, hier von 3,3 V, am Ausgang V_{OUT} generiert werden kann.

Ein solcher DC/DC-Wandler benötigt nur eine geringe Eingangsspannung von etwa 20 mV. Der dargestellte Lastwiderstand repräsentiert die Auswerteelektronik V (Fig. 2). Der zugehörige Energiespeicher ist nicht dargestellt.

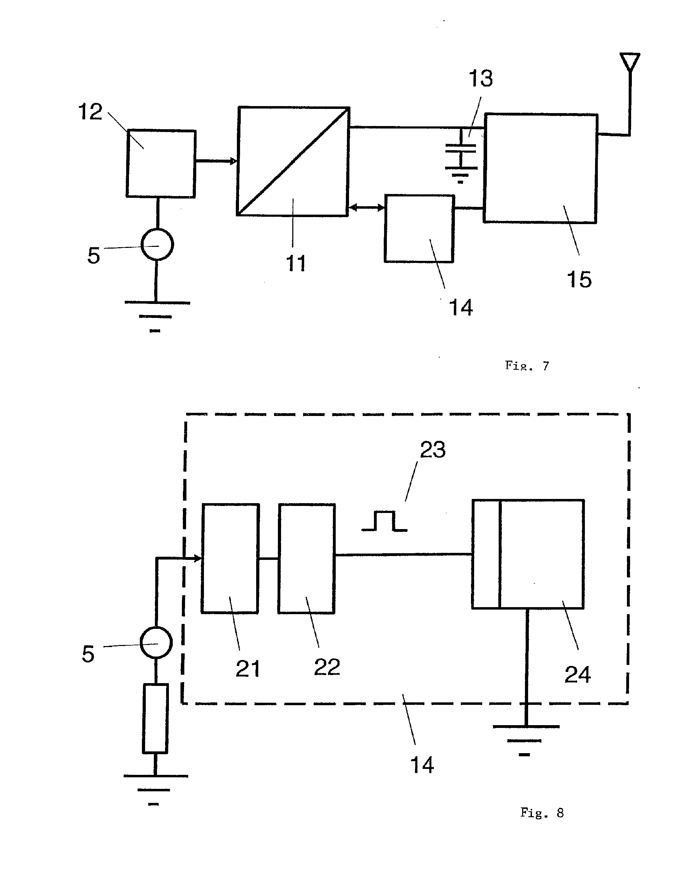

Die Fig. 7 zeigt ein Schaltbild ebenfalls mit einem AC/DC-Wandler 11 mit konstanter Ausgangsgleichspannung. Hierbei ist keine Gleichrichtung mit Siebung als Vorstufe erforderlich. Dem AC/DC-Spannungswandler sind zwei StepUp-SMD-Transformatoren vorgeordnet, welche mit einem Übersetzungsverhältnis von 1:100 die Eingangsspannung der Spule 5 (des Generators) hoch transformieren. Diese hoch transformierte Eingangsspannung versorgt den AC/DC-Spannungswandler 11 mit Energie, die an ihren Ausgängen zur Verfügung gestellt wird. Der Wandler 11 beginnt mit einer Eingangsspannung von 40 mV mit der AC/DC-Wandlung und erzeugt eine Gleichspannung am Ausgang von ebenfalls 3,3 V.

Dem Hauptausgang des Spannungswandlers 11 ist ein Energiespeicher 13 in Form eines Kondensators nachgeordnet und diesem ein Sender 16 zur Übertragung der gewonnenen Signale an entfernte Empfänger. Weiterhin ist eine Steuerelektronik 14 mit einem Mikrokontroller vorgesehen.

Die Signalverarbeitung ist in Fig. 8 dargestellt. Hierzu wird das von der beschriebenen Spule 5 gelieferte der Umdrehungscharakteristik entsprechende Wechselspannungssignal einem Komparator 21 zugeführt, welcher über seinen Ausgang einen Transistor 22, wie einen MOSFET-Transistor schaltet, wodurch ein Signal mit diskreten Impulsen oder Impulssignal 23 erzeugt wird, mit dem die Messelektronik 24 in einem Mikrokontroller versorgt wird. Um eine Rotationsrichtung zu detektieren, können zwei um 90° versetzte Signale des Generators verwendet werden.

### Bezugszeichenliste

- 1: Volumen-Durchflussmesser
- 2: Unterteil
- 2.1: Deckteil
- 3, 3a: Drehkörper
- 4: Magnet
- 5: Empfänger / Planarspule
- 5a, 5b, 5c: Einzelspulen
- 5.1: Platine
- 5.2, 5.3: Einzelspulen
- 5.4, 5.5: Spulenelemente
- 5.6: Spulenanschluss
- 5.7, 5.8, 5.9: Anschlusspunkt
- 6: Spannungswandler
- 6.1: Energiespeicher
- 7: DC/DC-Wandler
- 10.1: Rotation
- 10.2: Energiequelle
- 10.3: AC/DC-Wandler
- 10.4: elektrischer Speicher
- 10.5: Auswertelektronik
- 10.6: Signalaufbereitung
- 11: AC/DC-Wandler
- 12: StepUp-SMD-Transformatoren
- 13: Energiespeicher
- 14: Steuerelektronik
- 15: Anzeige
- 16: Sender
- 21: Komparator
- 22: MOSFET-Transistor
- 23: Impulssignal
- 24: Messelektronik

- A: Drehachse
- F: Flüssigkeitsfluss

## Patentansprüche

1. Durchflussmesser (1) für Fluide,
- mit mindestens einem drehbar um eine Drehachse (A) in einem Gehäuse gelagerten Drehkörper (3, 3a)
- mit mindestens einem magnetischen Geber (4) und mindestens einem elektro-magnetischen Empfänger (5),
- wobei Geber (4) und Empfänger (5) relativ zueinander drehbar am Drehkörper (3, 3a) bzw. am Gehäuse angeordnet sind, und
- wobei der mindestens eine Empfänger (5) mit einer Auswerteelektronik zur Detektion einer Drehbewegung des Drehkörpers (3, 3a) verbunden ist, **dadurch gekennzeichnet,**
**dass** der Empfänger (5) wenigstens eine Spule ist,
**dass** die Spule über den Umfang der Drehachse (A) hin mehrere einzelne segmentförmige Spulenelemente (5.4) aufweist, und
**dass** die Spulenelemente (5.4) über einen Spannungswandler mit einem Energiespeicher verbunden sind.

2. Durchflussmesser nach Anspruch 1, **dadurch gekennzeichnet, dass** Geber (4) und Empfänger (5) an der Stirnseite des Drehkörpers (3, 3a) bzw. an einer benachbarten Stirnseite des Gehäuses angeordnet sind.

3. Durchflussmesser nach Anspruch 1 oder 2, **dadurch gekennzeichnet, dass** die Spule flach in einer Radialebene über den Umfang der Drehachse (A) liegende Spulenelemente (5.4) aufweist.

4. Durchflussmesser nach einem der Ansprüche 1 bis 3, **dadurch gekennzeichnet, dass** der Spannungswandler eine Gleichrichterschaltung aufweist.

5. Durchflussmesser nach einem der Ansprüche 1 bis 4, **dadurch gekennzeichnet, dass** der Spannungswandler mindestens eine stabile Ausgangsspannung liefert.

6. Durchflussmesser nach einem der Ansprüche 1 bis 5, **dadurch gekennzeichnet, dass** die Spule aus Kupferleitungen besteht.

7. Durchflussmesser nach einem der Ansprüche 1 bis 6, **dadurch gekennzeichnet, dass** der Energiespeicher ein Kondensator ist.

8. Durchflussmesser nach einem der Ansprüche 1 bis 6, **dadurch gekennzeichnet, dass** der Energiespeicher ein Akkumulator ist.

9. Durchflussmesser nach einem der vorangehenden Ansprüche, **dadurch gekennzeichnet, dass** der Magnet (4) auf mindestens einem Drehkörper (3, 3a) und der Empfänger (5) in Form einer Spule am Gehäuse angeordnet sind.

10. Durchflussmesser nach einem der Ansprüche 1 bis 9, **dadurch gekennzeichnet, dass** der mindestens eine Magnet (4) im Gehäuse und der Empfänger in Form einer Spule in einem Drehkörper (3, 3a) angeordnet sind.

11. Durchflussmesser nach Anspruch 10, **dadurch gekennzeichnet, dass** die Auswerteelektronik im Drehteil angeordnet ist.

12. Durchflussmesser nach einem der vorangehenden Ansprüche, **dadurch gekennzeichnet, dass** der Drehkörper (3, 3a) zwei miteinander kämmende Ovalzahnräder aufweist.

13. Durchflussmesser nach einem der vorangehenden Ansprüche, **gekennzeichnet durch** einen Sender zur drahtlosen Übertragung der **durch** die Auswerteelektronik gewonnenen Drehbewegungsinformation.

14. Durchflussmesser nach einem der vorangehenden Ansprüche, **dadurch gekennzeichnet, dass** zumindest zwischen Rotor und Empfänger befindliche Teile aus nichtferromagnetischen bzw. nicht-magnetischen Werkstoffen bestehen.

15. Verfahren zum Messen des Durchflusses eines Fluids durch eine Leitung,
- wobei durch das Strömen des Fluids mindestens ein drehbar um eine Drehachse (A) in einem Gehäuse gelagerter Drehkörper (3, 3a) in Drehung versetzt wird,
- wobei jeweils zumindestens ein magnetischer Geber (4) und ein elektro-magnetischer Empfänger (5) relativ zueinander um die Drehachse (A) drehen, indem der oder die Geber (4) am Drehkörper (3, 3a) angeordnet ist bzw. sind und der bzw. die Empfänger am Gehäuse angeordnet ist bzw. sind oder vice versa und
- wobei ein durch die Relativdrehung von Geber (4) und Empfänger (5) in dem oder den Empfängern (5) erzeugtes elektrisches Signal mittels einer Auswerteelektronik zur Detektion einer Drehbewegung des Drehkörpers (3, 3a) ausgewertet wird,
**dadurch gekennzeichnet,**
**dass** ein bei Drehung des Drehkörpers (3, 3a) durch den Geber (4) in mindestens einer Spule mit über den Umfang der Drehachse (A) hin angeordneten mehreren einzelnen segmentförmigen Spulenelementen (5.4) als Empfänger (5) induzierte elektrische Strom-Spannungs-Impulse einem Energiespeicher zugeführt werden und diese laden.
